(19) Europäisches Patentamt
European Patent Office
Office européen des brevets

(11) EP 1 452 559 B1

(12) **EUROPEAN PATENT SPECIFICATION**

(45) Date of publication and mention of the grant of the patent:
**08.06.2005 Bulletin 2005/23**

(51) Int Cl.[7]: **C08K 5/3492**, C08K 5/3435

(21) Application number: **04004288.9**

(22) Date of filing: **26.02.2004**

(54) **Flame-retardant expanded polyolefins containing carbon black**

Flammgeschützte expandierte Polyolefine enthaltend Russ

Polyolefines expansées, ignifugées et contenant du noir de carbone

(84) Designated Contracting States:
**AT BE BG CH CY CZ DE DK EE ES FI FR GB GR HU IE IT LI LU MC NL PT RO SE SI SK TR**

(30) Priority: **28.02.2003 JP 2003053333**

(43) Date of publication of application:
**01.09.2004 Bulletin 2004/36**

(73) Proprietor: **JSP Corporation**
**Tokyo 100-0005 (JP)**

(72) Inventors:
- **Yoshizawa, Taku c/o Kanuma Plant of JSP Corp. Tochigi 322-0014 (JP)**
- **Sasaki, Kazutoshi c/o Kanuma Plant of JSP Corp. Tochigi 322-0014 (JP)**
- **Tsurugai, Kazuo c/o Kanuma Plant of JSP Corp. Tochigi 322-0014 (JP)**

(74) Representative:
**Müller-Gerbes, Margot, Dipl.-Ing. et al**
**Friedrich-Breuer-Strasse 112**
**53225 Bonn (DE)**

(56) References cited:
**EP-A- 0 889 085** **WO-A-99/00450**

- **PATENT ABSTRACTS OF JAPAN vol. 1996, no. 03, 29 March 1996 (1996-03-29) & JP 7 300537 A (JSP CORP), 14 November 1995 (1995-11-14)**
- **PATENT ABSTRACTS OF JAPAN vol. 1998, no. 11, 30 September 1998 (1998-09-30) & JP 10 147661 A (KANEGAFUCHI CHEM IND CO LTD), 2 June 1998 (1998-06-02)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### BACKGROUND OF THE INVENTION

1. Field of the Invention

The present invention relates to flame retardant polyolefin resin expanded particle that are particularly used in automobile bumper cores, side impact pads, and other automobile components, and in construction materials, electrical and electronic parts, cushioning and packaging materials, and other materials; and to in-mold foamed article of a flame retardant polyolefin resin obtained by the in-mold foaming of the expanded particles. More particularly, the present invention relates to flame retardant polyolefin resin expanded particles containing carbon black, and to in-mold foamed article of a flame retardant polyolefin resin obtained by the in-mold foaming of the expanded particles.

2. Description of the Related Art

Polyolefin resin in-mold foamed articles composed of polyolefin resin expanded particles are widely used in automobile components, electrical and electronic parts, construction materials, cushioning materials, packaging materials, and other materials. The in-mold foamed articles are molded to a desired shape with an in-mold foaming method in which expanded particles are filled in a mold and molded, and these articles are used in a wide variety of fields because of their ability to take complex shapes and to provide other advantages. However, polyolefin resin foamed article generally has a drawback in that they easily burn in comparison with non-foamed article.

In applications involving automobile components, construction materials, and parts for electric and electrical products in recent years, there has been demand for products having flame retardant and self-extinguishing properties, and in order to respond to such demands a considerable amount of research has been conducted until the present time with regard to making products that are flame retardant.

A halide compound, phosphorus compound, metal hydroxide, or other flame retardant is commonly added to impart flame resistance to plastic products.

Nevertheless, resin products that contain a bromine flame retardant or another halide flame retardant in order to impart flame resistance have drawbacks in that gases (dioxin and the like) harmful to humans can be potentially generated during burning, and the industry is continuing to switch to resin products that contain non-halide compounds as the flame retardant. Under such conditions, non-halide compounds are being considered for use as flame retardant in foamed article, and flame retardant polyolefin resin expanded particles that contain a non-halide compound, and in-mold foamed article prepared from these particles, are in demand.

A variety of methods are known to obtain in-mold foamed articles having flame resistance. For example, JP (Kokai) 7-309967 discloses an in-mold foamed article in which flame retardant polyolefin resin expanded particles containing a flame retardant promoter and a *bis*(alkyl ether)tetrabromobisphenol A flame retardant and/or a *bis*(alkyl ether)tetrabisphenol S flame retardant are used as halide flame retardants.

JP (Kokai) 10-147661 discloses flame retardant polyolefin resin pre-expanded particles in which ethylene bispentabromophenyl or ethylene bistetrabromophthalimide as a halide flame retardant, and antimony oxide as a flame retardant promoter are blended, and in-mold foamed article obtained by in-mold molding the pre-expanded particles.

JP (Kokai) 7-300537 discloses colored polypropylene resin expanded particles obtained by melt-kneading polyolefin resin that does not contain a colorant, and polyolefin resin that contains a color pigment, for example, 1 to 40 wt% organic pigment or carbon black, and in-mold foamed article obtained using the expanded particles.

It is difficult to obtain the desired color tone in a foamed article because the cell diameter of the expanded particles becomes smaller or the cell diameter readily becomes nonuniform due to cells of varying diameters being mixed therein, or due to other factors when the content of flame retardant, colorant, or other additive is considerable in in-mold foamed article in which polyolefin resin expanded particles are blended with a colorant and flame retardant, so the content of flame retardants and other additives is preferably kept as small as possible to obtain the desired coloring. However, the desired flame retarding effect is difficult to achieve if priority is placed on the color tone and the flame retardant content is reduced.

Carbon black is preferably used as a colorant because of its ability to produce a black color, which is the desired color tone targeted in this case, while used in a small amount. However, when carbon black is used as a colorant, the flame retarding action of the flame retardant is inhibited and the flame retarding properties tend to be markedly reduced. As a result, the desired flame retarding properties cannot be imparted unless a large amount of the flame retardant is added in order to obtain a flame retardant in-mold foamed article from expanded particles containing carbon black.

However, using a large amount of a halide flame retardant as a flame retardant is not desirable due to the possibility of generating considerable amounts of harmful gas. When a large amount of such a halide flame retardant

is used, the cell diameter of the expanded particles becomes smaller, or the cell diameter readily becomes nonuniform due to cells of varying diameters being mixed therein, or due to other factors. Moreover, the secondary foaming of the expanded particles is negatively affected, variability in the coloring occurs, and in-mold foamed article having an excellent appearance cannot be obtained. The mechanical strength (flexural strength, compressive strength) of the in-mold foamed article and other physical properties are also reduced.

Therefore, flame retardant polyolefin resin expanded particles in which a halide flame retardant is not used, and in-mold foamed article that show excellent flame resistance obtained by molding these expanded particles, are particularly in demand as polyolefin resin expanded particles in which carbon black is blended as the colorant, and in-mold foamed article obtained by in-mold molding these expanded particles.

In recent years, the compound shown by the general formula below has been reported as a compound that can be used to form flame retardants for polymers (JP (Kohyo) 2002-507238(WO99/00450)).

$$R_1NH\text{-}CH_2CH_2CH_2NR_2CH_2CH_2NR_3CH_2CH_2CH_2NHR_4 \quad (I)$$

(In the formula (I), $R_1$ and $R_2$ are an s-triazine moiety shown in the formula (II) below, one of $R_3$ and $R_4$ is an s-triazine moiety shown in the formula (II) below, and the other of $R_3$ and $R_4$ is a hydrogen atom; and in the formula (II), R is a methyl group, propyl group, cyclohexyl group, or octyl group, and $R_5$ is an alkyl group having 1 to 12 carbon atoms.)

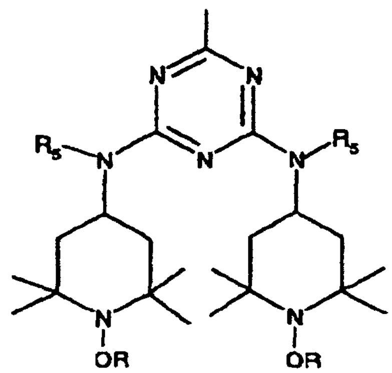

(II)

However, no disclosure has been made with regard to using this compound to impart flame resistance to polyolefin resin expanded article, to resin expanded particles containing carbon black in particular, and to polyolefin resin in-mold foamed article obtained by the in-mold molding of the expanded particles.

The present inventors accomplished the present invention having discovered that polyolefin resin expanded particles containing a small amount of a specific sterically hindered amine flame retardant without the use of a halide flame retardant, and in-mold foamed article in which the expanded particles are mutually fused, exhibits excellent flame resistance when carbon black is used as a colorant, and that the above-described problems that occur when a conventional halide flame retardant is used can be wholly solved.

An object of the present invention is to provide a colored flame retardant polyolefin resin in-mold foamed article that has excellent flame retardant and physical properties, and in which harmful gas is not generated during burning, by the in-mold molding of polyolefin resin expanded particles containing carbon black.

Another object of the present invention is to provide flame retardant polyolefin resin expanded particles that are capable of exerting excellent flame retardant effect with a small amount of flame retardant, and that are capable of producing flame retardant polyolefin resin in-mold foamed article that have a good appearance without color variation in spite of carbon black as the colorant.

A further object of the present invention is to provide a colored flame retardant polyolefin resin in-mold foamed article that has excellent flame retardant and physical properties, exhibits an excellent black tone without color variation or the like, and has a good appearance, by the in-mold molding of polyolefin resin expanded particles containing carbon black as a colorant and a specific sterically hindered amine flame retardant as a flame retardant.

In the present specification, polyolefin resin expanded particles or polyolefin resin expanded particles containing a flame retardant may simply be referred to as "expanded particles."

In-mold foamed article obtained by in-mold molding polyolefin resin expanded particles may simply referred

to as "foamed article."

SUMMARY OF THE INVENTION

The present invention relates to flame retardant polyolefin resin expanded particle containing carbon black, and flame retardant polyolefin resin in-mold expanded article in which the expanded particles are mutually fused. The present invention relates to a polyolefin resin expanded particle, containing 0.5 to 20 wt% of carbon black, and containing 0.01 to 10 wt% of a hindered amine flame retardant shown by the general formula (I)

$$R_1NH\text{-}CH_2CH_2CH_2NR_2CH_2CH_2NR_3CH_2CH_2CH_2NHR_4 \quad (I)$$

wherein in formula (I) $R_1$ and $R_2$ are an s-triazine moiety shown in the formula (II) below, one of $R_3$ and $R_4$ is an s-triazine moiety shown in the formula (II) and the other of $R_3$ and $R_4$ is a hydrogen atom; and in the formula (II), R is a methyl group, propyl group, cyclohexyl group, or octyl group, and $R_5$ is an alkyl group having 1 to 12 carbon atoms.

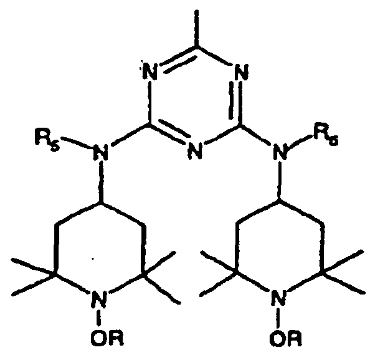

(II)

The polyolefin resin expanded particle is characterized in that the content of the hindered amine flame retardant is from not less than 0.01 wt% to not more than 5 wt%.

The polyolefin resin expanded particle is further characterized in that the content of the hindered amine flame retardant is from not less than 0.01 wt% to less than 2 wt%.

The polyolefin resin expanded particle is moreover characterized in that the content of the hindered amine flame retardant is from not less than 0.01 wt% to less than 0.25 wt%.

The polyolefin resin expanded particle is furthermore characterized in that the content of the hindered amine flame retardant is from not less than 0.01 wt% to less than 1 wt%.

The polyolefin resin expanded particle is characterized in that the content of the carbon black is 0.5 to 10 wt%.

The polyolefin resin expanded particle is further characterized in that the content of the carbon black is 0.5 to 8 wt%.

The polyolefin resin expanded particle is further characterized in that the carbon black is furnace black.

The polyolefin resin that constitutes the expanded particle is a polypropylene resin, and a DSC curve obtained by the differential scanning calorimetry of the expanded particle is characterized in exhibiting at least an endothermic curve peak that is inherent to the polypropylene resin and an endothermic curve peak at a temperature higher than that of the first endothermic curve peak, and the heat quantity of the higher-temperature endothermic curve peak is from not less than 5% to not more than 70% with respect to the total heat quantity of all of the endothermic curve peaks.

The present invention relates to a flame retardant polyolefin resin in-mold foamed article obtained by the in-mold molding of flame retardant polyolefin resin expanded particles that contain a flame retardant and carbon black described above.

The present invention relates to a polyolefin resin in-mold foamed article in which polyolefin resin expanded particles are mutually fused, wherein the expanded particles contain 0.5 to 20 wt% of carbon black, and contain 0.01 to 10 wt% of a hindered amine flame retardant shown by the general formula (I)

$$R_1NH\text{-}CH_2CH_2CH_2NR_2CH_2CH_2NR_3CH_2CH_2CH_2NHR_4 \quad (I)$$

wherein in formula (I) $R_1$ and $R_2$ are an s-triazine moiety shown in the formula (II) below, one of $R_3$ and $R_4$ is an s-triazine moiety shown in formula (II), and the other of $R_3$ and $R_4$ is a hydrogen atom; and in the formula (II), R is a methyl group, propyl group, cyclohexyl group, or octyl group, and $R_5$ is an alkyl group having 1 to 12 carbon atoms.

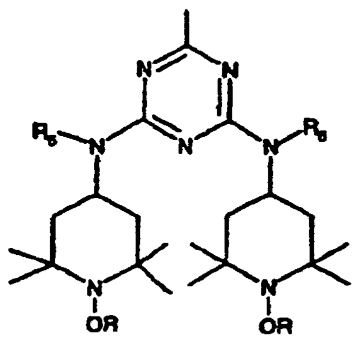

(II)

The polyolefin resin in-mold foamed article is characterized in that the content of the hindered amine flame retardant is from not less than 0.01 wt% to not more than 5 wt%.

The polyolefin resin in-mold foamed article is characterized in that the content of the hindered amine flame retardant is from not less than 0.01 wt% to not more than 3 wt%.

The polyolefin resin in-mold foamed article is characterized in that the content of the hindered amine flame retardant is from not less than 0.01 wt% to less than 1 wt%.

The polyolefin resin in-mold foamed article is characterized in that the content of the hindered amine flame retardant is from not less than 0.01 wt% to less than 0.25 wt%.

The polyolefin resin in-mold foamed article is characterized in that the content of the carbon black is 0.5 to 10 wt%.

The polyolefin resin in-mold foamed article is characterized in that the content of the carbon black is 0.5 to 8 wt%.

The polyolefin resin in-mold foamed article is characterized in that the carbon black is furnace black.

The polyolefin resin in-mold foamed article is characterized in that the apparent density is 15 to 100 g/L.

According to the present invention, it is possible to provide polyolefin resin expanded particles that have the desired black tone, possess excellent flame resistance, and contain only a small amount of a flame retardant that is not more than 10 wt%, less than 1 wt%, and particularly less than 0.25 wt%, and also to provide a polyolefin resin in-mold foamed article that has flame resistance and is obtained by the in-mold molding of the expanded particles in the case of a polyolefin resin composition in which carbon black is blended as a colorant by the use of a hindered amine flame retardant shown by the above-mentioned general formula(I) as a flame retardant used in imparting flame resistance to the polyolefin resin expanded particles.

The polyolefin resin in-mold foamed article of the present invention that is obtained by the in-mold molding of the above-described flame retardant polyolefin resin expanded particles is an in-mold foamed article that does not generate harmful gas when burned and that exhibits excellent flame resistance in spite of the content of the flame retardant is a much lower than that of a conventional halide flame retardant.

The content of the hindered amine flame retardant in the polyolefin resin expanded particles of the present invention is a much lower in comparison with that of a conventional halide flame retardant, so the cell diameter may become smaller or nonuniformity, and a flame retardant in-mold foamed article having excellent black color tone can be obtained. Because the amount of flame retardant is low in comparison with a conventional halide flame retardant, the cell membrane is not destroyed and the cells do not join together, so there is no possibility that the flexural strength, compressive strength, or other rigidity-related characteristics of the in-mold foamed article will be reduced.

The polyolefin resin in-mold foamed article of the present invention is suitable for use in automobile members, construction insulating materials, and other applications because it has self-extinguishing flame resistance and is endowed with the cushioning, heat insulating, and other inherent characteristics of polyolefin resin foamed article.

BRIEF DESCRIPTION OF THE DRAWINGS

FIG. 1 is a first DSC curve measured by the differential scanning calorimetry of a polypropylene resin composed of the expanded particles of the present invention. The letter "***a***" is the inherent endothermic curve peak of the polypropylene resin composed of the expanded particles, and "***b***" is an endothermic curve peak at a higher temperature than the first endothermic curve peak.

FIG. 2 is a second DSC curve measured by the differential scanning calorimetry of the above-mentioned polypropylene resin.

DESCRIPTION OF THE PREFERRED EMBODIMENTS

Examples of polyolefin resins composed of the polyolefin resin expanded particles of the present invention include high-density polyethylene, medium-density polyethylene, branched low-density polyethylene, linear low-density polyethylene, linear very-low-density polyethylene, ethylene/propylene random copolymers, ethylene/propylene block copolymers, ethylene/butene block copolymers, ethylene/butene random copolymers, ethylene/vinyl acetate copolymers, ethylene/methyl methacrylate copolymers, and other polyethylene resins in which the content the ethylene component is not less than 60 mol%; and ionomers in which the molecules of an ethylene/methacrylic acid copolymer are crosslinked with a metal ion, propylene homopolymers, propylene/ethylene random copolymers, propylene/ethylene block copolymers, propylene/butene random copolymers, propylene/butene block copolymers, propylene/ethylene/butene terpolymers, propylene/acrylate copolymers, propylene/maleic anhydride copolymers, and other polypropylene resins in which the content of the propylene component is not less than 60 mol%; as well as polybutene and polypentene. In addition to these, it is possible to use copolymers of ethylene, propylene, butane, pentene, and other olefin monomers with styrene and other monomers copolymerizable with these olefin monomers.

Among these, the following are preferred as examples of polyolefin resins that have good cushioning properties and recover readily from compressive strain: high-density polyethylene, medium-density polyethylene, low-density polyethylene, linear low-density polyethylene, linear very-low-density polyethylene, and other types of polyethylene, as well as propylene homopolymers, polybutene, propylene/ethylene copolymers, propylene/butene copolymers, and propylene/ethylene/butene terpolymers; and especially preferable examples include propylene homopolymers, propylene/ethylene random copolymers, propylene/butene random copolymers, propylene/butene block copolymers, propylene/ethylene/butene terpolymers, and linear low-density polyethylene.

Furthermore, from the standpoint of rigidity, a polypropylene resin is preferred, and a propylene homopolymer, propylene/ethylene random copolymer, propylene/butene random copolymer, propylene/butene block copolymer, or propylene/ethylene/butene terpolymer is especially preferred.

The polyolefin resin may be one that has been crosslinked by peroxide or radiation, or one that has been left un-crosslinked, but a recyclable, easy-to-manufacture un-crosslinked resin is preferred.

The polyolefin resin may be used singly or as a mixture of two types or more. Other thermoplastic resins, such as polystyrene, polyvinyl acetate, styrene/butadiene copolymer, and polybutadiene, may also be admixed as needed. In this case, the polyolefin resin is preferably prepared so as to have a content of at least 70 wt%, and preferably 85 wt% or higher.

The flame retardant contained in the polyolefin resin expanded particles of the present invention is a hindered amine flame retardant shown by the general formula (I) below.

$$\mathbf{R_1NH\text{-}CH_2CH_2CH_2NR_2CH_2CH_2NR_3CH_2CH_2CH_2NHR_4} \quad \text{(I)}$$

(In the formula (I), $R_1$ and $R_2$ are an s-triazine moiety shown in the formula (II) below, one of $R_3$ and $R_4$ is an s-triazine moiety shown in the formula (II) below, and the other of $R_3$ and $R_4$ is a hydrogen atom; and in the formula (II), R is a methyl group, propyl group, cyclohexyl group, or octyl group, and $R_5$ is an alkyl group having 1 to 12 carbon atoms.)

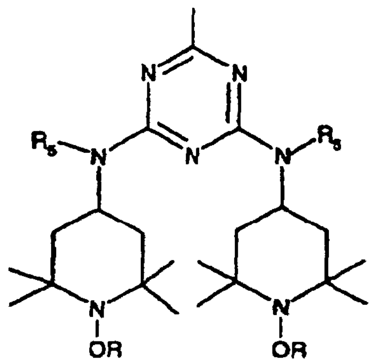

(II)

In the formula (II) above, R is preferably a cyclohexyl group, and $R_5$ is preferably a butyl group.

An essential feature of the polyolefin resin expanded particles of the present invention is the inclusion of carbon black as the colorant. As described above, the expected flame resistance is difficult to obtain unless a large quantity of conventional halide flame retardant is used to impart sufficient flame resistance to a foamed article obtained by the in-mold molding of polyolefin resin expanded particles containing carbon black. When a large amount of a halide flame retardant is used, the undesirable result is that the cell diameter may become smaller or the cell diameters become nonuniform, and the physical properties of the foamed article are reduced; therefore, the maximum flame retardant effect is preferably obtained with a small amount of flame retardant.

The hindered amine flame retardant shown by the general formula (I) above and used in the present invention allows excellent flame resistance that exhibits self-extinguishing properties to be obtained using a much smaller amount of retardant in comparison with a conventional halide flame retardant, as can be seen in the embodiments described below. The mechanism thereof is not clear, but a carbon black-containing expanded article containing the above-described hindered amine flame retardant in accordance with the present invention is thought to have a drip facilitating effect due to the synergistic effect of the hindered amine flame retardant and the carbon black, because when the article makes contact with a flame, it does ignite, but it exhibits self-extinguishing properties whereby molten liquid drips and the flame is immediately extinguished, even though a small amount of flame retardant is used.

The amount of the hindered amine flame retardant contained in the polyolefin resin expanded particles of the present invention is generically from not less than 0.01 wt% to not more than 10 wt% with respect to the base resin. If the content thereof is less than 0.01 wt%, the flame retardant effect might not be demonstrated. If, on the other hand, the content exceeds 10 wt%, the flame retardant effect is not particularly changed, and the unnecessary content adds to higher costs, resulting in also being economically disadvantageous. If a large amount of flame retardant is included, the cell diameters of the expanded particles may become smaller, the cell diameters may easily become nonuniform, the desired tone of the black color of the resulting foamed article may become lighter, and color variation may occur. The hindered amine flame retardant of the present invention can be made self-extinguishing by being added in a small amount of carbon black, but in order to sufficiently demonstrate a flame retardant effect, the content of the flame retardant is preferably not less than 0.03 wt%, more preferably not less than 0.06 wt%, and even more preferably not less than 0.08 wt% with respect to the base resin. Conversely, including a large amount is not preferred based on the above-described points, and the content is preferably not more than 5 wt%, more preferably not more than 3 wt%, even more preferably less than 2 wt%, still even more preferably less than 1 wt%, and especially preferably less than 0.25 wt% with respect to the base resin.

Examples of the carbon black that may be used in the present invention include channel black, roller black, furnace black, thermal black, acetylene black, and ketjen black. Among these, furnace black is preferred based on its balance between costs and dispersibility in polyolefin resin.

The content of the carbon black in the polyolefin resin expanded particles of the present invention should be from not less than 0.5 wt% to not more than 20 wt% in order to assure a desired black color tone. If the content is less than 0.5 wt%, then the desired color tone may not be obtained and the object thereof may not be achieved. If the content conversely exceeds 20 wt%, then the cell membranes may easily be destroyed, the cells easily became opened cell, the closed cell ratio lowered, and the flexural strength, the compressive strength, and rigidity-related characteristics of the foamed article reduced. The black color tone furthermore does not change if the content exceeds 20 wt%, and the costs conversely increase.

From the viewpoint of the balance between the black color tone, the cells become closed cell, and the flexural strength, compressive strength, and other rigidity-related characteristics of the foamed article, the content of the carbon

black is preferably not more than 15 wt%, more preferably not more than 10 wt%, and especially preferably not more than 8 wt%. Conversely, the lower limit of the blending amount is preferably not less than 1 wt%, is more preferably not less than 1.5 wt%, and is especially preferably not less than 2 wt%.

The average particle diameter of the carbon black used in the present invention affects the staining properties, dispersibility in the base resin, and the like, so the average particle diameter of the carbon black is preferably from not less than 1 nm to not more than 100 nm from the viewpoint of enabling the expanded particles to be uniformly toned, preventing a breakdown in the cell membrances of the expanded particles due to an aggregation of the carbon black, inhibiting opened cell, and avoiding a reduction of ability in the secondary foaming of the expanded particles. The average particle diameter is more preferably not less than 5 nm, and especially preferably not less than 10 nm because in this case it is difficult for aggregation to occur and dispersion is facilitated. The average particle diameter is preferably not more than 80 nm, and more preferably not more than 50 nm from the viewpoint that a deep color tone can easily be obtained with a small amount of colorant.

The average particle diameter of the carbon black was measured with an electron microscope. More specifically, carbon black was dispersed in water, a specimen was placed on a prepared slide, the water was removed, a photograph including several hundreds of particles in the range of view was taken thereafter, 1,000 particles were measured at random along an unidirectional diameter (Green diameter) serving as the representative diameter, a cumulative distribution curve of the number count reference was created with the horizontal axis serving as the particle diameter (nm) and the vertical axis serving as the number count cumulative distribution (%) from the measured particle size distribution, and the 50% diameter of the number count cumulative distribution was adopted as the average particle diameter.

Polyolefin resin melted in an extruder is extruded in the form of strands from the tip of the extruder, and thereafter formed into particles by pelletizing or another method. In the present invention, the hindered amine flame retardant and carbon black are kneaded into the melted resin inside the extruder in the resin particle production step. Various known additives used with foamed article may be kneaded as necessary when the hindered amine flame retardant and the carbon black are kneaded into the resin particles.

Examples the above-mentioned additives include oxidation inhibitors, UV inhibitors, antistatic agents, metal deactivators, and crystal nucleating agents. The content of these additives is preferably about 20 parts by weight or less, and especially preferred is 5 parts by weight or less per 100 parts by weight of the base resin composed of polyolefin resin and other resins. The lower limit thereof is roughly 0.01 parts by weight.

The method for producing expanded particles containing carbon black and hindered amine flame retardant in accordance with the present invention may be one in which resin particles containing hindered amine flame retardant and carbon black are dispersed in a dispersion medium with a foaming agent under pressure in a sealing vessel, the dispersion is heated to a predetermined temperature, the foaming agent is impregnated in the resin particles, and the particles impregnated with the foaming agent are subsequently discharged with the dispersion medium from the vessel under atmospheric pressure (hereinafter referred to as the dispersion medium discharge foaming method); one in which the resin particles are dispersed in a dispersion medium with a foaming agent under pressure in a sealing vessel, the dispersion is heated to a predetermined temperature, the foaming agent is impregnated in the resin particles, the temperature is subsequently lowered to room temperature, the product is depressurized and removed as expanded resin particles, and the foaming resin particles are allowed to foam with the aid of steam, hot air, or another heating medium; or another known method.

In the above-described method, the dispersion medium discharge foaming method is preferred because the expanded particles can be efficiently produced in a short period of time, and productivity is excellent.

The dispersion medium for dispersing the resin particles in the sealing vessel should be one in which the resin particles do not dissolve, and examples of such a dispersion medium include water, ethylene glycol, glycerin, methanol, and ethanol, but water is normally used.

The blend ratio of the resin particles with respect to the dispersion medium is preferably 150 to 500 parts by weight of the dispersion medium to 100 parts by weight of the resin particles in order to increase the stirring efficiency of the resin particles.

Dispersing agents for preventing fusion between resin particles may be added as required to the dispersion medium. An organic or inorganic dispersing agent may be used as long as it does not melt or dissolve in the dispersion medium due to heating, but inorganic dispersing agents are generically preferred. Examples of an inorganic dispersing agent include aluminum oxide, titanium oxide, aluminum hydroxide, basic magnesium carbonate, basic zinc carbonate, calcium carbonate, tricalcium phosphate, magnesium pyrophosphate, talc, kaolin, and clay. The dispersing agent is preferably one with a particle diameter of 0.001 to 100 μm, and especially preferably one with a particle diameter of 0.001 to 30 μm. The amount of dispersing agent added is normally preferred to be 0.01 to 10 parts by weight to 100 parts by weight of the resin particles.

The inorganic dispersing agent is preferably used in conjunction with a surfactant. Examples of a suitable surfactant include sodium dodecylbenzenesulfonate, sodium α-olefinsulfonate, sodium alkylsulfonate, sodium oleate,

or another anionic surfactant. The added surfactant is normally preferred to be 0.001 to 5 parts by weight to 100 parts by weight of the resin particles.

An organic physical foaming agent and an inorganic physical foaming agent may be used singly or as a mixture, and an admixture of an organic physical foaming agent and an inorganic physical foaming agent may also be used.

Examples of an organic physical foaming agent include propane, butane, pentane, hexane, heptane, and other aliphatic hydrocarbons; cyclobutane, cyclopentane, and other alicyclic hydrocarbons; and trichlorofluoromethane, dichlorodifluoromethane, dichlorotetrafluoroethane, 1,2-difluoroethane, 1,2,2,2-tetrafluoroethane, methyl chloride, ethyl chloride, methylene chloride, and other halogenated hydrocarbons. Nitrogen, oxygen, carbon dioxide, argon, water, air, or the like may be used as the inorganic physical foaming agent.

Among the foaming agents described above, one having as its principal component one, two, or more inorganic physical foaming agents selected from the group composed of nitrogen, oxygen, air, carbon dioxide, and water is particularly suitable. Among these, nitrogen and air are preferred considering the stability of the apparent density of the resin particles, the environmental impact, and the cost. When water is used as the foaming agent, the water (including deionized water) used as the dispersion medium may be directly used in order to disperse the resin particles in a sealing vessel.

The added amount of foaming agent varies according to the type of foaming agent and resin particles, the objective density, and other factors, but the required amount of foaming agent is kept at roughly about 2 to 50 parts by weight to 100 parts by weight of the resin particles in order to obtain expanded particles generically having a density of about 15 to 550 g/L.

The resin particles are dispersed in the dispersing agent, the foaming agent is supplied to the sealing vessel, and the system is agitated under heating and pressure to impregnate the resin particles with the foaming agent, but this temperature is preferably set to a normal foaming temperature. The foaming temperature is a temperature that allows the resin particles to foam when depressurized, and, as an example, any temperature may be selected in a range of about (mT - 15°C) to (mT + 15°C), where mT is the melting temperature of the resin when un-crosslinked polyolefin resin particles are used. The stirring and holding time under heating varies according to the type of foaming agent and resin, the blend ratio, and other factors, but is generically about 5 to 120 minutes.

After the resin particles have been impregnated with the foaming agent as described above, the resin particles and the dispersing agent are simultaneously discharged in an atmosphere that is at a lower pressure than the vessel pressure, normally under atmospheric pressure, to allow the resin particles to foam, but when the resin particles and the dispersing agent are discharged, a pressurized gas is introduced to the vessel so that the vessel pressure does not decrease even if the amount of the vessel contents decreases, and the vessel pressure is maintained at a high level.

The polyolefin resin that constitutes the expanded particles in the present invention is a polypropylene resin, and a DSC curve obtained by differential scanning calorimetry of the expanded particles at least exhibits an endothermic curve peak (hereinafter simply referred to as "inherent peak a") that is characteristic of the polypropylene resin and an endothermic curve peak (hereinafter simply referred to as "high-temperature peak") at higher temperature than that of the endothermic curve peak, and the heat quantity of the high-temperature peak is from not less than 5% to not more than 70% with respect to the total heat quantity of all of the endothermic curve peaks. The expanded particles exhibit excellent rigidity, have a high closed cell ratio, and are suitable for heat molding.

When the heat quantity of the high-temperature peak is less than 5% with respect to the total heat quantity of all of the endothermic curve peaks, the steam pressure during molding can be kept low, but the compressive strength, the absorbed amount of energy, and other characteristics of the resulting foamed article tend to be adversely affected. When the heat quantity is greater than 70%, the air pressure that must be kept inside the expanded particles tends to be excessively high before the expanded particles are molded, and the molding cycle tends to be prolonged.

Because of these considerations, when the polypropylene resin that constitutes the expanded particles is a propylene/ethylene copolymer, the heat quantity of the high-temperature peak is preferably not less than 10%, and more preferably not less than 15% with respect to the total heat quantity of all of the endothermic curve peaks. Also, the upper limit value thereof is preferably not more than 60%, and more preferably not more than 50%.

Because of these considerations, when the polypropylene resin that constitutes the expanded particles is a propylene homopolymer, the heat quantity of the high-temperature peak is preferably not less than 20%, more preferably not less than 25%, and even more preferably not less than 30% with respect to the total heat quantity of all of the endothermic curve peaks. Also, the upper limit value thereof is preferably not more than 60%, and more preferably not more than 50%.

The total heat quantity of all of the endothermic curve peaks of the expanded particles in the present invention is preferably 60 to 150 J/g. If the heat quantity is less than 60 J/g, then compressive strength and other physical properties tend to decrease. Conversely, if the heat quantity exceeds 150 J/g, then the secondary foaming characteristics during molding tend to be adversely affected and may result in a foamed article with a considerable amount of voids.

When the polypropylene that constitutes the expanded particles is a propylene/ethylene copolymer, the total heat quantity of the endothermic curve peaks is preferably 60 to 100 J/g.

When the polypropylene that constitutes the expanded particles is a propylene homopolymer, the total heat quantity of the endothermic curve peaks is preferably 60 to 150 J/g.

The heat quantity of the high-temperature peak was measured according to the following measuring method, which conforms to JIS K7122 (1987).

First, 2 to 10 mg of the expanded particles was collected, the temperature was raised at a rate of 10°C/minute from room temperature (10 to 40°C) to 220°C, and the heat quantity was measured with a heat flux differential scanning calorimeter. An example of the DSC curve obtained by the measurement is shown in FIG. 1. FIG. 1 shows a case in which the polyolefin resin that constitutes the expanded particles is a polypropylene resin (propylene/ethylene random copolymer).

An inherent peak ***a*** that is derived from the polypropylene resin that constitutes the expanded particles, and a high-temperature peak ***b*** that is at a higher temperature than the inherent peak ***a*** is present in the DSC curve in FIG. 1, and the heat quantity of the high-temperature peak ***b*** corresponds to the peak surface area thereof, and can be specifically calculated as follows.

First, a straight line ($\alpha$ - $\beta$) is drawn to connect point $\alpha$ that corresponds to 80°C on the DSC curve, and point $\beta$ that corresponds to the melt completion temperature T of the expanded particles on the DSC curve. The above-mentioned melt completion temperature T is defined to be the intersection between the DSC curve on the higher-temperature side of the high-temperature peak ***b*** and the base line on the higher-temperature side.

Next, a straight line parallel to the vertical axis of the graph is drawn from point $\gamma$ on the DSC curve that corresponds to trough portion (inflection portion) between the inherent peak ***a*** and the high-temperature peak ***b***, and the point that intersects with the straight line ($\alpha$ - $\beta$) is taken to be $\sigma$. The surface area of the high-temperature peak ***b*** is the surface area of the portion (the shaded portion of FIG. 1) enclosed by the curve of the part containing the high-temperature peak ***b*** of the DSC curve, by segment ($\sigma$ - $\beta$), and by segment ($\gamma$ - $\sigma$), and this surface area corresponds to the heat quantity of the high-temperature peak.

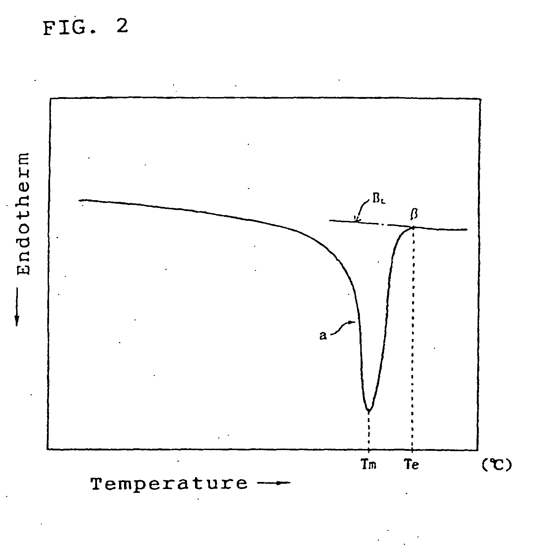

The high-temperature peak ***b*** is seen in the first DSC curve measured as described above, but is not seen in the DSC curve obtained by raising the temperature a second time. In the second DSC curve, only the inherent peak ***a*** is seen in the polypropylene resin that constitutes the expanded particles, as shown in FIG. 2. In FIG. 2, Tm is an endothermic curve peak temperature on the second DSC curve, and Te is melt completion temperature on the second DSC curve.

When measuring the inherent peak and the high-temperature peak of the expanded particles with the differential scanning calorimeter as described above, a plurality of expanded particles with a total weight of 2 to 10 mg should be directly used in the measurement when the weight of a single expanded particle is less than 2 mg, one expanded particle should be directly used in the measurement when the weight of a single expanded particle is 2 to 10 mg, and one expanded particle should be cut into a plurality of particles, and a single fragment specimen weighing 2 to 10 mg should be used in the measurement when the weight of a single expanded particle exceeds 10 mg. However, the fragment specimens are cut from a single expanded particle, so when cutting, the original surface of the expanded particle should be preserved without being removed, and the specimens are preferably cut so that they have the same shape to the extent possible, and that the expanded particle surfaces that are preserved without being removed are uniform and have the same surface area to the extent possible in each of the fragment specimens. When the weight of a single expanded particle is 18 mg, for example, two 9 mg fragment specimens having substantially the same shape can be obtained by cutting the expanded particle facing an arbitrary direction horizontally from a midpoint in the vertical direction. One of the two fragment specimens obtained in this manner should be used to measure the high-temperature peak and the inherent peak as described above.

The case in which the polyolefin resin that constitutes the expanded particles is a polypropylene resin was described above, but measurement can be performed in the same manner for other olefin resins.

To obtain the flame retardant polyolefin resin foamed article of the present invention, a known in-mold molding method is adopted whereby flame retardant polyolefin resin expanded particles composed of expanded particles having the heat quantity of the high-temperature peak are loaded into a mold with a desired shape, heated by steam or another means, and allowed to foam.

There are no particular limits to the apparent density of the expanded particles of the present invention, and the apparent density of the expanded particles may be freely determined in accordance with the application of the resulting foamed article, but the expanded particles of the present invention normally have an apparent density of about 15 to 550 g/L. Generally, flame resistance becomes more difficult to ensure with lower apparent density, but flame resistance can be imparted to foamed article even with a low density of 20 to 140 g/L as the apparent density of the expanded particles by using the above-described hindered amine flame retardant as the flame retardant in accordance with the present invention, and flame resistance can be sufficiently imparted even with a density that is as low as 25 to 140 g/L, and even 30 to 140 g/L.

A small amount of expanded particles other than the flame retardant expanded particles that constitute the foamed article of the present invention may be included in the present invention as long as the flame resistance is not declining.

The flame resistance in the foamed article of the present invention is based on a combustion test specified by FMVSS302, and is divided into flammability, a slow-burning property, and a self-extinguishing property.

Flammability is a combustion velocity that exceeds 100 mm/min. Flammability in the above-mentioned combustion test is a property whereby a flame crosses the reference line A of a test piece and burns from the reference line A until reaching the reference line B, or a property whereby a flame crosses the reference line A and is extinguished before reaching the reference line B and 60 seconds elapse after reference line A is crossed, or the flame passes over 50 mm after reference line A is crossed and is extinguished.

The slow-burning property is a combustion velocity that is not more than 100 mm/min. The slow-burning property in the above-mentioned test is a property whereby a flame crosses the reference line A of a test piece and burns from the reference line A until reaching the reference line B or a property whereby a flame crosses the reference line A and is extinguished before reaching the reference line B and 60 seconds elapse after reference line A is crossed or the flame passes over 50 mm after reference line A is crossed and is extinguished.

The self-extinguishing property in the above-mentioned test is a property whereby a flame is extinguished before arriving at the reference line A, or is extinguished within 60 seconds or within 50 mm of crossing the reference line A.

The foamed article of the present invention preferably has at least a slow-burning property, and having a self-extinguishing property is especially preferable.

The above-described flame resistance is defined as a self-extinguishing property when a flame on a test piece is extinguished before reaching the reference line A (38 mm), and the value calculated by the equation (1) below is adopted as the combustion velocity for other cases.

$$B = 60 \times D/T \qquad (1)$$

In the equation, B is the combustion velocity per minute (mm/min), D is the length that the flame has burned (mm), and T is the time (seconds) that the flame requires to burn D mm.

The apparent density of the foamed article in the present invention is generally 15 to 400 g/L, but when the apparent density of a common foamed article decreases, it becomes difficult to impart flame resistance, and a considerable amount of flame retardant must be included; but using the hindered amine flame retardant of the present invention allows excellent flame resistance to be achieved with a small amount of flame retardant even at a low density of 15 to 100 g/L, and flame resistance can be imparted even with a density that is as low as 18 to 100 g/L, and even 22 to 100 g/L.

The average cell diameter in the foamed article of the present invention affects the color tone and mechanical strength of the resulting foamed article so a deep black tone can be obtained with a small amount of carbon black; the compressive stress, flexural strength, and other characteristics of the mechanical strength of the resulting light weight foamed article are excellent; the cells are not destroyed by compression; and there is no residual strain, so, based on these facts, the average cell diameter is preferably not less than 180 μm, more preferably not less than 200 μm, and even more not less than 250 μm. Conversely, the upper limit thereof is preferably not more than 500 μm, more preferably not more than 400 μm, and even more not more than 350 μm.

The method for measuring the average cell diameter was conducted as follows. A surface 10 mm inward from the skin layer of a foamed article that was perpendicularly cut in the direction of the greatest thickness was enlarged so that the entire cross-section that corresponded to a single expanded particle was in the field of view of a microscope, and this cross-section was photographed. A straight line was drawn on the photograph so as to divide the photographed cross-section into two substantially equal parts, the value obtained by dividing the length of the line by the total number of cells in contact with the line was taken to be the average cell diameter of one expanded particle, the average cell diameter of the cross-section that corresponded to 20 expanded particles on the perpendicularly cut surface was calculated in the same manner, and the arithmetic mean thereof was adopted as the average cell diameter of the foamed article.

The average cell diameter of the foamed article is adjusted primarily when expanded particles are obtained, and this can be achieved by adjusting the type of cell regulator, the additive amount of the cell regulator, the ambient temperature during foaming, the discharge velocity from the sealing vessel during foaming, and so on. The average cell diameter can be adjusted to a large amount, for example, by reducing the additive amount of the cell regulator, setting the ambient temperature during foaming lower than room temperature, slowing the discharge velocity from the sealing vessel during foaming, and so on.

The foamed article of the present invention may also be obtained by a continuous molding method. This

continuous molding method allows a foamed article to be produced by continuously feed expanded particles with the internal pressure of cells as needed between belts that continuously move above and below the channel of a molding machine, allowing the expanded particles to fuse with each other by expansion when passing through a saturated steam supply area (heating area), passing the expanded particles through a cooling area for cooling, removing the resulting molded article from the channel, and sequentially cutting the article to appropriate lengths. This type of continuous molding method is cited in JP (Kokai) 9-104026, JP (Kokai) 9-104027, and JP (Kokai) 10-180888, for example.

The continuous cell ratio of the foamed article of the present invention is preferably not more than 40%, more preferably not more than 30%, and especially preferable is not more than 25% when according to procedure C of ASTM-D2856-70. The lower the continuous cell ratio is in a molded body, the higher the mechanical strength is.

Surface decorative material can be integrally laminated on at least a portion of the surface of the foamed article of the present invention. Production methods for such a laminated-composite in-mold foamed article are cited in detail in US Patent No. 5928776, US Patent No. 6096417, US Patent No. 6033770, US Patent No. 5474841, European Patent No. 477476, WO 98/34770, WO 98/00287, Japanese Patent No. 3092227, and other publications.

The foamed article produced the present invention may also be manufactured by completely or partially embedding an insert material, and integrating this material to obtain a composite. Production methods for such an insert-composite in-mold foamed article are cited in detail in US Patent No. 6033770, US Patent No. 5474841, JP (Kokai) 59-127714, Japanese Patent No. 3092227, and other publications.

Examples

The present invention is described in detail with examples below, but the present invention is not limited by the examples.

[Preparation of resin particles that contain hindered amine flame retardant and carbon black]

Examples 1 to 7

First, 0.05 parts by weight of boric zinc powder (cell regulator), flame retardant A (particulate form, Ciba Specialty Chemicals K.K., commercial name: Flamestab NOR116 (reaction products of N,N'-ethane-1,2-diylbis (1,3-propanediamine), cyclohexane, peroxidized 4-butylamino-2,2,6,6,-tetramthylpiperidine and 2,4,6-trichloro-1,3,5-triazine)) shown by the structure shown in Table 1, and furnace black as the carbon black (average particle diameter: 20 nm) were added to 100 parts by weight of a propylene/ethylene random copolymer (ethylene component: 2.3 wt%; MI: 10 g/10 minutes; density: 900g/L; melting temperature: 146.5°C, and melt completion temperature: 163°C) so that the content in the resin was as shown in Table 3; the components were melt kneaded with an extruder, extruded in water in the form of strands, and cooled; and the strands were subsequently cut with a pelletizer to prepare pellets having a length/diameter ratio of 1.0, and an average weight of 2 mg.

Comparative Example 1

Other than omitting the flame retardant, pellets were prepared in the same manner as in the examples.

Comparative Examples 2 and 3

Other than blending flame retardant B (*bis* (2,3-dibromopropyl ether)tetrabromobisphenol S) so as to achieved the contents shown in Tables 3 and 4 and flame retardant C (flame retardant promoter) (antimony trioxide) so as to achieve the contents shown in Tables 3 and 4, pellets were prepared in the same manner as in the examples.

[Preparation of expanded particles]

First, 0.3 parts by weight of kaolin as a dispersant, 0.02 parts by weight of sodium dodecylbenzenesulfonate as the surfactant, and 230 parts by weight of water as the dispersion medium with respect to 100 parts by weight of the pellets obtained in the examples and the comparative examples were loaded into a 400-liter autoclave and hermetically sealed, carbon dioxide was injected into the autoclave as a foaming agent, the pressure inside the autoclave was thereafter adjusted to 1.0 MPa (gauge pressure), the temperature within the autoclave was raised at a rate of 3°C/min, and the system was heated while being agitated. When the temperature within the autoclave reached 100°C during heating, the pressure within the autoclave was adjusted to 1.5 MPa (gauge pressure); at 120°C the pressure within the autoclave was adjusted to 2.0 MPa (gauge pressure); at 140°C the pressure within the autoclave was adjusted to 2.0 MPa (gauge pressure); when the temperature was 5°C lower than the foaming temperature shown in Table 2,

the pressure within the autoclave was adjusted to 2.0 MPa (gauge pressure) and held for 10 minutes at that temperature; the temperature was subsequently increased to the foaming temperature shown in Table 2 and held at that temperature for five minutes; high-pressure carbon dioxide gas that was under a pressure equal to the corresponding equilibrium vapor pressure was thereafter introduced into the autoclave, and one end of the autoclave was opened while applying back pressure; and the resin particles and water were simultaneously released under atmospheric pressure, yielding pre-expanded particles. The apparent density and heat quantity of the high-temperature peak of the resulting pre-expanded particles are shown in Table 2.

Pressure was applied to the pre-expanded particles for 12 hours at a gauge pressure of 0.50 MPa inside a pressure tank, and pre-expanded particles having the internal pressure shown in Table 2 were prepared. The pre-expanded particles were loaded into a two-stage foaming machine, heated for some time by saturated steam pressure shown in Table 3; and thereafter released under atmospheric pressure, yielding expanded particles having the apparent density shown in Table 3.

The resulting expanded particles were dried and pressurized for 12 hours at a gauge pressure of 0.20 MPa inside the pressure tank. The expanded particles having the internal pressure shown in Table 3 were loaded into the mold (internal dimensions: 250 mm × 200 mm × 50 mm), and heated by saturated steam pressure shown in Table 3, yielding a foamed article.

Notches were provided to the foamed articles obtained from examples 1 to 7 and comparative examples 1 to 3, and when the incised articles were bent and broken, it was found that all of the particles were broken in the fracture cross section, and that the fusion characteristics were excellent.

The foamed articles obtained in the examples were black colored foamed articles having good color tone without color variation, and the average cell diameter was 250 to 300 μm.

The comparative examples 1 and 2 possessed the same deep color as the examples, and the average cell diameter was 300 μm for all. However, comparative example 3 revealed a lighter color in comparison with example 7. This difference is due to the fact that the average cell diameter in comparative example 3 is 150 μm, and the average cell diameter in example 7 is 300 μm.

Table 1 shows the flame retardants used in the examples and comparative examples.

Table 2 shows the pressure within the autoclave before foaming (referred to as "tank pressure" in the table), the foaming temperature, the apparent density of the pre-expanded particles, the heat quantity of the high-temperature peak of the pre-expanded particles, the heat quantity of the high-temperature peak with respect to the total heat quantity of all of the endothermic curve peaks, and the internal pressure of the pre-expanded particles. (In the table, ***d*** is the heat quantity of the high-temperature peak, ***e*** is the total heat quantity of the endothermic curve peaks, and the percentage values are *d*/*e*.)

The heat quantity of the high-temperature peak of the pre-expanded particles shown in Table 2 was measured in the same manner in which the heat quantity of the high-temperature peak described above was measured using pre-expanded particles.

Table 3 shows the saturated steam pressure in the two-stage foaming conditions, the heating time and the apparent density of the expanded particles in the two-stage foaming conditions, and the saturated steam pressure and the internal pressure of the expanded particles in the molding conditions. The content of the hindered amine flame retardant in the expanding particles is referred to as "flame retardant content" in the table. The content of the carbon black is shown as "CB content" in the table.

The apparent densities of the pre-expanded particles and the expanded particles shown in Tables 2 and 3 were calculated (W1/V1) by preparing a graduated measuring cylinder containing ethanol at 23°C, immersing 500 or more expanded particles (the group of expanded particles with weight W1) that had been allowed to stand for two days at a relative humidity of 50%, a temperature of 23°C, and a pressure of 1 atm with the aid of a wire net or the like in the graduated measuring cylinder, and dividing the weight W1 (g) of the group of expanded particles placed in the graduated measuring cylinder by the volume V1 (L) of the group of expanded particles that was read from the rise in ethanol level.

The internal pressure of the pre-expanded particles and the expanded particles shown in Tables 2 and 3 were measured in the following manner. A group of expanded particles with elevated internal pressure was brought out from the pressure tank; the expanded particles were thereafter put within 60 seconds into a polyethylene bag having the size of about 70 mm x 100 mm and was provided with a plurality of pinholes having a size that allowed air to pass freely without allowing the expanded particles to pass; the particles were moved to a room with a constant temperature of 23°C, a relative humidity of 50%, and atmospheric pressure; and the total weight of the particle was subsequently measured in the temperature-controlled room. The weight of expanded particles was measured 120 seconds after they had been brought out from the pressure tank. The weight at this time was taken to be Q (g). The bag was subsequently left in the temperature-controlled room for 48 hours. The pressurized gas within the expanded particles migrated through the cell membranes with the passage of the time, and the weight of the expanded particles decreased in the process, so the weight of the bag was measured again because a balance was reached after 48 hours and the weight

of the expanded particles had substantially stabilized. The weight at this time was taken to be U (g). The entire of expanded particles was then immediately brought out from the bag in the temperature-controlled room, and the weight of the bag alone was measured. The weight thereof was taken to be Z (g). All of the weights mentioned above were measured to 0.0001 g. The difference between Q (g) and U (g) was defined as the increased air weight W (g), and the internal pressure P (MPa) of the expanded particles was calculated from the following equation (2). This internal pressure P corresponded to gauge pressure.

$$P = (W \div M) \times R \times T \div V \quad (2)$$

In the equation, M is the molecular weight of the air, and a constant of 28.8 (g/mol) was adopted herein. R is the gas constant, and a constant of 0.0083 (MPa·L/(K·mol)) was adopted herein. T is the absolute temperature, and since an ambient temperature of 23°C was adopted, the temperature was a constant of 296 (K). V is the volume (L) that results from subtracting the volume of the base resin in the group of expanded particles from the apparent volume of the expanded particles.

Table 4 shows the flame retardant content, the carbon black content (referred to as "CB content" in the table) in the foamed article, the apparent density of the foamed article, the heat quantity of the high-temperature peak of the foamed article, the heat quantity of the high-temperature peak with respect to the total heat quantity for all of the endothermic curve peaks, the combustion velocity, and the results of evaluating the foamed article. (In the table, D is the heat quantity of the high-temperature peak, E is the total of the heat quantity of the endothermic curve peaks, and the percentage values were obtained as D/E.)

The heat quantity of the high-temperature peak of the foamed article is a value measured with the above-described method using expanded particles collected from the center portion of the foamed article.

The apparent density of the foamed article shown in Table 4 was calculated by dividing the weight W2(g) of the foamed article by the volume V2 (L) of the foamed article (W2/V2) (units: g/L). The combustion velocity and evaluation results of the foamed article were measured by cutting away a test piece size of 12 mm × 350 mm × 100 mm from the resulting foamed article, leaving the skin layer only the surface of 350 mm × 100 mm, bringing a flame into contact with that surface, and performing the flammability test cited in FMVSS 302. The results are shown in Table 4.

The evaluation of the flame resistance in Table 4 was performed based on the value calculated with the above-described equation (1).

Table 1

| | |
|---|---|
| FLAME RETARDANT A | 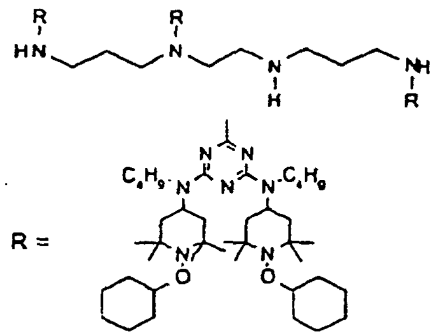 R = |
| FLAME RETARDANT B | BIS(2,3-DIBROMOPROPYL ETHER) TETRABROMOBISPHENOL S |
| FLAME RETARDANT C | ANTIMONY TRIOXIDE |

Table 2

| | | TANK PRESSURE PRIOR TO FOAMING (MP a (G)) | FOAMING TEMPERATURE (°C) | PRE-EXPANDED PARTICLES | | | INTERNAL PRESSURE OF THE PRE-EXPANDED PARTICLES (MP a (G)) |
|---|---|---|---|---|---|---|---|
| | | | | APPARENT DENSITY (g/L) | HEAT QUANTITY OF THE HIGH-TEMPERATURE PEAK(J/g) | d/e (%) | |
| EXAMPLES | 1 | 2.2 | 150.5 | 78 | 17.3 | 22 | 0.42 |
| | 2 | | | 87 | 18.1 | 23 | 0.42 |
| | 3 | | | 85 | 16.8 | 21 | 0.41 |
| | 4 | | | 80 | 16.2 | 20 | 0.40 |
| | 5 | | | 85 | 16.5 | 21 | 0.40 |
| | 6 | | | 85 | 14.8 | 19 | 0.41 |
| | 7 | | | 82 | 17.5 | 22 | 0.41 |
| COMPERATIVE EXAMPLES | 1 | 2.2 | 151.0 | 85 | 15.4 | 19 | 0.40 |
| | 2 | | 150.5 | 86 | 17.4 | 22 | 0.40 |
| | 3 | | | 81 | 17.2 | 22 | 0.41 |

Table 3

| | | TWO-STAGE FOAMING CONDITIONS | | EXPANDED PARTICLES | | | | | MOLDING CONDITIONS | |
|---|---|---|---|---|---|---|---|---|---|---|
| | | SATURATED STEAM PRESSURE (MP a (G)) | HEATING TIME (SECONDS) | APPARENT DENSITY (g/L) | FLAME RETARDANT CONTENT (wt%) | | | CB CONTENT (wt%) | INTERNAL PRESSURE (MP a (G)) | SATURATED STEAM PRESSURE (MP a (G)) |
| | | | | | A | B | C | | | |
| EXAMPLES | 1 | 0.08 | 10 | 44 | 0.05 | — | — | 4 | 0.10 | 0.30 |
| | 2 | | | 44 | 0.1 | — | — | | 0.10 | |
| | 3 | | | 45 | 0.3 | — | — | | 0.10 | |
| | 4 | | | 45 | 0.5 | — | — | | 0.11 | |
| | 5 | | | 45 | 1 | — | — | | 0.11 | |
| | 6 | | | 44 | 2 | — | — | | 0.10 | |
| | 7 | | | 44 | 5 | — | — | | 0.10 | |
| COMPERATIVE EXAMPLES | 1 | 0.08 | 10 | 44 | — | — | — | 4 | 0.11 | 0.30 |
| | 2 | 0.09 | | 45 | — | 0.03 | 0.02 | | 0.11 | 0.30 |
| | 3 | | | | — | 3.33 | 1.66 | | | |

Table 4

| | | FOAMED ARTICLE | | | | | | | | | |
|---|---|---|---|---|---|---|---|---|---|---|---|
| | | FLAME RETARDANT CONTENT (wt%) | | | CB CONTENT (wt%) | APPARENT DENSITY (g/L) | HEAT QUANTITY OF THE HIGH-TEMPERATURE PEAK (J/g) | D/E (%) | FLAMMABILITY | | |
| | | A | B | C | | | | | COMBUSTION VELOCITY (mm/min) | | EVALUATION (*1) |
| EXAMPLES | 1 | 0.05 | — | — | 4 | 38 | 17.3 | 22 | 68.9 | — | GOOD |
| | 2 | 0.1 | — | — | | 33 | 18.1 | 23 | — | SELF-EXTINGUISHING | VERY GOOD |
| | 3 | 0.3 | — | — | | 30 | 16.8 | 21 | — | SELF-EXTINGUISHING | VERY GOOD |
| | 4 | 0.5 | — | — | | 30 | 16.2 | 20 | — | SELF-EXTINGUISHING | VERY GOOD |
| | 5 | 1 | — | — | | 30 | 16.5 | 21 | — | SELF-EXTINGUISHING | VERY GOOD |
| | 6 | 2 | — | — | | 30 | 14.8 | 19 | — | SELF-EXTINGUISHING | VERY GOOD |
| | 7 | 5 | — | — | | 30 | 17.5 | 22 | — | SELF-EXTINGUISHING | VERY GOOD |
| COMPERATIVE EXAMPLES | 1 | — | — | — | 4 | 31 | 15.4 | 19 | 100.0 | — | POOR |
| | 2 | — | 0.03 | 0.02 | | 33 | 17.4 | 22 | 90.5 | — | POOR |
| | 3 | — | 3.33 | 1.66 | | 33 | 17.2 | 22 | 75.4 | — | GOOD |

(*1) VERY GOOD; The flame was extinguished before reaching the reference line A

GOOD; The combustion velocity was not more than 80 mm/min when the flame passed over the reference line A and reached the reference line B

POOR; The combustion velocity was greater than 90 mm/min when the flame passed over the reference line A and reached the reference line B

## Claims

**1.** A polyolefin resin expanded particle, containing 0.5 to 20 wt% of carbon black, and containing 0.01 to 10 wt% of a hindered amine flame retardant shown by the general formula (I).

$$R_1NH\text{-}CH_2CH_2CH_2NR_2CH_2CH_2NR_3CH_2CH_2CH_2NHR_4 \quad (I)$$

wherein in formula (I) $R_1$ and $R_2$ are an s-triazine moiety shown in the formula (II) below, one of $R_3$ and $R_4$ is an s-triazine moiety shown in formula (II), and the other of $R_3$ and $R_4$ is a hydrogen atom; and in the formula (II), R is a methyl group, propyl group, cyclohexyl group, or octyl group, and $R_5$ is an alkyl group having 1 to 12 carbon atoms.

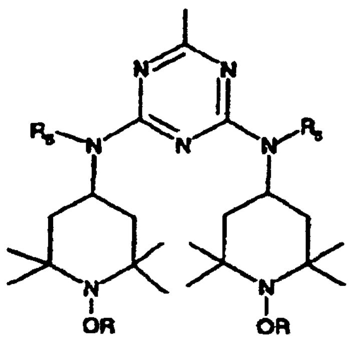

(II)

**2.** The polyolefin resin expanded particle according to claim 1, wherein the content of the hindered amine flame retardant is from not less than 0.01 wt% to not more than 5 wt%.

**3.** The polyolefin resin expanded particle according to claim 1, wherein the content of the hindered amine flame retardant is from not less than 0.01 wt% to not more than 3 wt%.

**4.** The polyolefin resin expanded particle according to claim 1, wherein the content of the hindered amine flame retardant is from not less than 0.01 wt% to less than 1 wt%.

**5.** The polyolefin resin expanded particle according to claim 1, wherein the content of the hindered amine flame retardant is from not less than 0.01 wt% to less than 0.25 wt%.

**6.** The polyolefin resin expanded particle according to any of claims 1 to 5, wherein the content of the carbon black is from not less than 0.5 wt% to not more than 10 wt%.

**7.** The polyolefin resin expanded particle according to any of claims 1 to 5, wherein the content of the carbon black is from not less than 0.5 wt% to not more than 8 wt%.

**8.** The polyolefin resin expanded particle according to any of claims 1 to 7, wherein the carbon black is furnace black.

**9.** The polyolefin resin expanded particle according to any of claims 1 to 8, wherein the polyolefin resin comprising the expanded particle is a polypropylene resin, and a DSC curve obtained by differential scanning calorimetry of the expanded particle exhibits at least an endothermic curve peak that is inherent to the polypropylene resin and an endothermic curve peak at a temperature higher than that of the first endothermic curve peak, and the heat quantity of the higher-temperature endothermic curve peak is from not less than 5% to not more than 70% with respect to the total heat quantity of all of the endothermic curve peaks.

**10.** A polyolefin resin in-mold foamed article in which polyolefin resin expanded particles are mutually fused, said

expanded particles containing 0.5 to 20 wt% of carbon black, and containing 0.01 to 10 wt% of a hindered amine flame retardant shown by the general formula (I)

$$R_1NH\text{-}CH_2CH_2CH_2NR_2CH_2CH_2NR_3CH_2CH_2CH_2NHR_4 \quad (I)$$

wherein in formula (I) $R_1$ and $R_2$ are an s-triazine moiety shown in the formula (II) below, one of $R_3$ and $R_4$ is an s-triazine moiety shown in formula (II), and the other of $R_3$ and $R_4$ is a hydrogen atom; and in the formula (II), R is a methyl group, propyl group, cyclohexyl group, or octyl group, and $R_5$ is an alkyl group having 1 to 12 carbon atoms.

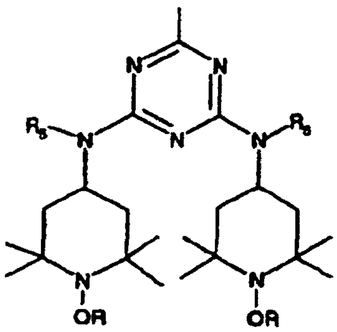

(II)

**11.** The polyolefin resin in-mold foamed article according to claim 10, wherein the content of the hindered amine flame retardant is from not less than 0.01 wt% to not more than 5 wt%.

**12.** The polyolefin resin in-mold foamed article according to claim 10, wherein the content of the hindered amine flame retardant is from not less than 0.01 to not more than 3 wt%.

**13.** The polyolefin resin in-mold foamed article according to claim 10, wherein the content of the hindered amine flame retardant is from not less than 0.01 wt% to less than 1 wt%.

**14.** The polyolefin resin in-mold foamed article according to claim 10, wherein the content of the hindered amine flame retardant is from not less than 0.01 wt% to less than 0.25 wt%.

**15.** The polyolefin resin in-mold foamed article according to any of claims 10 to 14, wherein the content of the carbon black is from not less than 0.5 wt% to not more than 10 wt%.

**16.** The polyolefin resin in-mold foamed article according to any of claims 10 to 14, wherein the content of the carbon black is from not less than 0.5 wt% to not more than 8 wt%.

**17.** The polyolefin resin in-mold foamed article according to any of claims 10 to 16, wherein the carbon black is furnace black.

**18.** The polyolefin resin in-mold foamed article according to any of claims 10 to 17, wherein the apparent density is from not less than 15 g/L to not more than 100 g/L.

**Patentansprüche**

**1.** Expandierter Polyolefinharzpartikel, enthaltend 0,5 bis 20 Gew.-% Ruß und enthaltend 0,01 bis 10 Gew.-% eines flammhemmenden gehinderten Amins, welches durch die allgemeine Formel (I)

$$R_1\text{-NH-CH}_2\text{-CH}_2\text{-CH}_2\text{-NR}_2\text{-CH}_2\text{-CH}_2\text{-NR}_3\text{-CH}_2\text{-CH}_2\text{-CH}_2\text{-NH-R}_4 \quad (I)$$

beschrieben ist, wobei in der Formel (I) $R_1$ und $R_2$ S-Triazinreste sind, die in der unten stehenden Formel (II) beschrieben sind, einer von $R_3$ und $R_4$ ein in unten stehender Formel (II) beschriebener S-Triazinrest ist und der andere von $R_3$ und $R_4$ ein Wasserstoffatom ist; und in der Formel (II) R eine Methylgruppe, Propylgruppe, Cyclohexylgruppe oder Oktylgruppe und $R_5$ eine Alkylgruppe mit 1 bis 12 Kohlenstoffatomen ist.

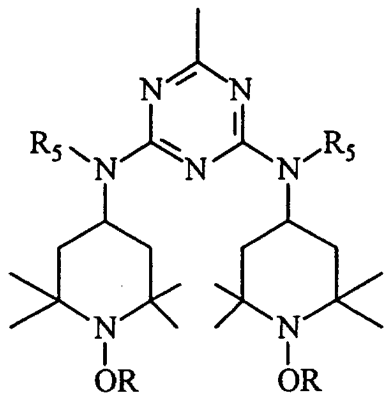
(II)

2. Expandierter Polyolefinharzpartikel nach Anspruch 1, wobei der Gehalt des flammhemmenden gehinderten Amins zwischen nicht weniger als 0,01 Gew.-% und nicht mehr als 5 Gew.-% liegt.

3. Expandierter Polyolefinharzpartikel nach Anspruch 1, wobei der Gehalt des flammhemmenden gehinderten Amins zwischen nicht weniger als 0,01 Gew.-% und nicht mehr als 3 Gew.-% liegt.

4. Expandierter Polyolefinharzpartikel nach Anspruch 1, wobei der Gehalt des flammhemmenden gehinderten Amins zwischen nicht weniger als 0,01 Gew.-% und weniger als 1 Gew.-% liegt.

5. Expandierter Polyolefinharzpartikel nach Anspruch 1, wobei der Gehalt des flammhemmenden gehinderten Amins zwischen nicht weniger als 0,01 Gew.-% und weniger als 0,25 Gew.-% liegt.

6. Expandierter Polyolefinharzpartikel nach einem der Ansprüche 1 bis 5, wobei der Gehalt an Ruß zwischen nicht weniger als 0,5 Gew.-% und nicht mehr als 10 Gew.-% liegt.

7. Expandierter Polyolefinharzpartikel nach einem der Ansprüche 1 bis 5, wobei der Gehalt an Ruß zwischen nicht weniger als 0,5 Gew.-% und nicht mehr als 8 Gew.-% liegt.

8. Expandierter Polyolefinharzpartikel nach einem der Ansprüche 1 bis 7, wobei der Ruß ein Ofenruß ist.

9. Expandierter Polyolefinharzpartikel nach einem der Ansprüche 1 bis 8, wobei das den expandierten Partikel bildende Polyolefinharz ein Polypropylenharz ist und eine DSC-Kurve, die durch Differential-Scanning-Calorimetrie des expandierten Partikels erhalten wird, zumindest einen endothermen Kurvenscheitel zeigt, der inhärent zu dem Polyolefinharz ist sowie einen endothermen Kurvenscheitel bei einer höheren Temperatur als der des ersten endothermen Kurvenscheitels, und die Wärmemenge des endothermen Kurvenscheitels höherer Temperatur zwischen nicht weniger als 5% bis zu nicht mehr als 70% bezogen auf die Gesamtwärmemenge aller endothermer Kurvenscheitel liegt.

10. In einer Form geschäumter Polyolefinharzgegenstand, bei welchem expandierte Polyolefinharzpartikel gegenseitig schmelzverbunden sind, wobei die expandierten Partikel 0,5 bis 20 Gew.-% Ruß enthalten und 0,1 bis 10 Gew.-% eines flammhemmenden gehinderten Amins enthalten, welches durch die allgemeine Formel (I)

$$R_1\text{-NH-CH}_2\text{-CH}_2\text{-CH}_2\text{-NR}_2\text{-CH}_2\text{-CH}_2\text{-NR}_3\text{-CH}_2\text{-CH}_2\text{-CH}_2\text{-NH-R}_4 \quad (I)$$

dargestellt wird, wobei in der Formel (I) $R_1$ und $R_2$ S-Triazinreste sind, die in unten stehender Formel (II) dargestellt sind, einer von $R_3$ und $R_4$ ein S-Triazinrest ist, der in unten stehender Formel (II) dargestellt ist und der andere von $R_3$ und $R_4$ ein Wasserstoffatom ist; und in der Formel (II) R eine Methylgruppe, Propylgruppe, Cyclohexylgruppe oder Oktylgruppe und $R_5$ eine Alkylgruppe mit 1 bis 12 Kohlenstoffatomen ist.

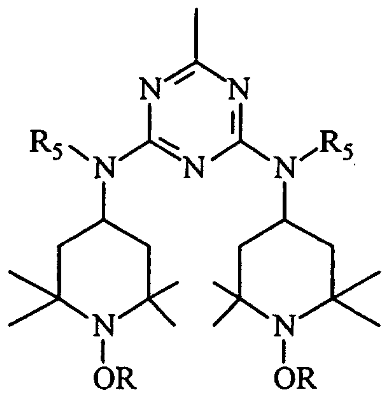
(II)

11. In einer Form geschäumter Polyolefinharzgegenstand nach Anspruch 10, wobei der Gehalt des flammhemmenden gehinderten Amins zwischen nicht weniger als 0,01 Gew.-% und nicht mehr als 5 Gew.-% liegt.

12. In einer Form geschäumter Polyolefinharzgegenstand nach Anspruch 10, wobei der Gehalt des flammhemmenden gehinderten Amins zwischen nicht weniger als 0,01 und nicht mehr als 3 Gew.-% liegt.

13. In einer Form geschäumter Polyolefinharzgegenstand nach Anspruch 10, wobei der Gehalt des flammhemmenden gehinderten Amins zwischen nicht weniger als 0,01 Gew.-% und weniger als 1 Gew.-% liegt.

14. In einer Form geschäumter Polyolefinharzgegenstand nach Anspruch 10, wobei der Gehalt des flammhemmenden gehinderten Amins zwischen nicht weniger als 0,01 Gew.-% und weniger als 0,25 Gew.-% liegt.

15. In einer Form geschäumter Polyolefinharzgegenstand nach einem der Ansprüche 10 bis 14, wobei der Gehalt an Ruß zwischen nicht weniger als 0,5 Gew.-% und nicht mehr als 10 Gew.-% liegt.

16. In einer Form geschäumter Polyolefinharzgegenstand nach einem der Ansprüche 10 bis 14, wobei der Gehalt an Ruß zwischen nicht weniger als 0,5 Gew.-% und nicht mehr als 8 Gew.-% liegt.

17. In einer Form geschäumter Polyolefinharzgegenstand nach einem der Ansprüche 10 bis 16, wobei der Ruß ein Ofenruß ist.

18. In einer Form geschäumter Polyolefinharzgegenstand nach einem der Ansprüche 10 bis 17, wobei die Rohdichte zwischen nicht weniger als 15 g/L und nicht mehr als 100 g/L liegt.

## Revendications

1. Particule de résine de polyoléfine expansée, contenant de 0,5 à 20 % en poids de noir de carbone, ainsi que de 0,01 à 10 % en poids d'un agent ignifugeant de type amine encombrée, représenté par la formule générale (I) :

$$R_1\text{-NH-CH}_2\text{-CH}_2\text{-CH}_2\text{-NR}_2\text{-CH}_2\text{-CH}_2\text{-NR}_3\text{-CH}_2\text{-CH}_2\text{-CH}_2\text{-NH-R}_4 \quad (I)$$

dans laquelle formule (I) $R_1$ et $R_2$ représentent chacun un fragment s-triazinique représenté par la formule (II) indiquée ci-dessous, et des symboles $R_3$ et $R_4$, l'un représente un fragment s-triazinique représenté par la formule (II) indiquée ci-dessous et l'autre représente un atome d'hydrogène ;

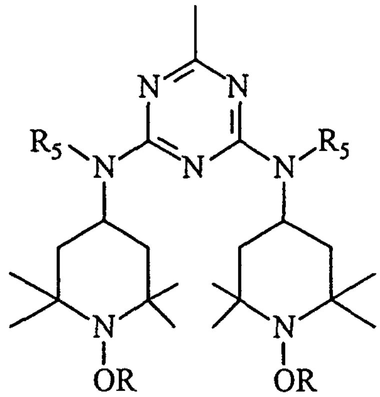

(II)

dans cette formule (II), R représente un groupe méthyle, propyle, octyle ou cyclohexyle, et $R_5$ représente un groupe alkyle comportant 1 à 12 atomes de carbone.

**2.** Particule de résine de polyoléfine expansée, conforme à la revendication 1, dont la teneur en agent ignifugeant de type amine encombrée vaut d'au moins 0,01 % en poids à au plus 5 % en poids.

**3.** Particule de résine de polyoléfine expansée, conforme à la revendication 1, dont la teneur en agent ignifugeant de type amine encombrée vaut d'au moins 0,01 % en poids à au plus 3 % en poids.

**4.** Particule de résine de polyoléfine expansée, conforme à la revendication 1, dont la teneur en agent ignifugeant de type amine encombrée vaut d'au moins 0,01 % en poids à moins de 1 % en poids.

**5.** Particule de résine de polyoléfine expansée, conforme à la revendication 1, dont la teneur en agent ignifugeant de type amine encombrée vaut d'au moins 0,01 % en poids à moins de 0,25 % en poids.

**6.** Particule de résine de polyoléfine expansée, conforme à l'une des revendications 1 à 5, dont la teneur en noir de carbone vaut d'au moins 0,5 % en poids à au plus 10 % en poids.

**7.** Particule de résine de polyoléfine expansée, conforme à l'une des revendications 1 à 5, dont la teneur en noir de carbone vaut d'au moins 0,5 % en poids à au plus 8 % en poids.

**8.** Particule de résine de polyoléfine expansée, conforme à l'une des revendications 1 à 7, dans laquelle le noir de carbone est un noir de four.

**9.** Particule de résine de polyoléfine expansée, conforme à l'une des revendications 1 à 8, dans laquelle la résine de polyoléfine dont est faite la particule expansée est une résine de polypropylène, et dont la courbe d'AED, obtenue lors d'une analyse enthalpique différentielle de la particule expansée, présente au moins un pic endothermique intrinsèque à la résine de polypropylène et un autre pic endothermique, situé à plus haute température que le premier pic endothermique et correspondant à une quantité de chaleur qui représente d'au moins 5 % à au plus 70 % de la quantité totale de chaleur correspondant à tous les pics entothermiques de la courbe.

**10.** Pièce en résine de polyoléfine expansée en moule, dans laquelle sont fusionnées les unes aux autres des particules de résine de polyoléfine expansée qui contiennent de 0,5 à 20 % en poids de noir de carbone, ainsi que de 0,01 à 10 % en poids d'un agent ignifugeant de type amine encombrée, représenté par la formule générale (I) :

$$R_1\text{-NH-}CH_2\text{-}CH_2\text{-}CH_2\text{-NR}_2\text{-}CH_2\text{-}CH_2\text{-NR}_3\text{-}CH_2\text{-}CH_2\text{-}CH_2\text{-NH-}R_4 \quad (I)$$

dans laquelle formule (I) $R_1$ et $R_2$ représentent chacun un fragment s-triazinique représenté par la formule (II) indiquée ci-dessous, et des symboles $R_3$ et $R_4$, l'un représente un fragment s-triazinique représenté par la formule (II) indiquée ci-dessous et l'autre représente un atome d'hydrogène ;

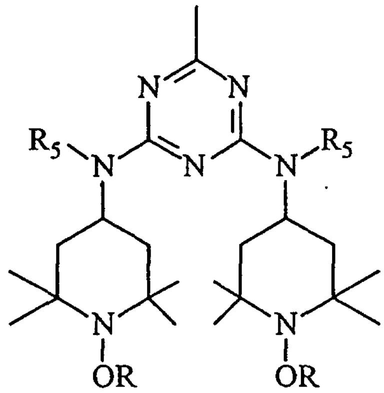

(II)

dans cette formule (II), R représente un groupe méthyle, propyle, octyle ou cyclohexyle, et $R_5$ représente un groupe alkyle comportant 1 à 12 atomes de carbone.

**11.** Pièce en résine de polyoléfine expansée en moule, conforme à la revendication 10, dans laquelle la teneur en agent ignifugeant de type amine encombrée vaut d'au moins 0,01 % en poids à au plus 5 % en poids.

**12.** Pièce en résine de polyoléfine expansée en moule, conforme à la revendication 10, dans laquelle la teneur en agent ignifugeant de type amine encombrée vaut d'au moins 0,01 % en poids à au plus 3 % en poids.

**13.** Pièce en résine de polyoléfine expansée en moule, conforme à la revendication 10, dans laquelle la teneur en agent ignifugeant de type amine encombrée vaut d'au moins 0,01 % en poids à moins de 1 % en poids.

**14.** Pièce en résine de polyoléfine expansée en moule, conforme à la revendication 10, dans laquelle la teneur en agent ignifugeant de type amine encombrée vaut d'au moins 0,01 % en poids à moins de 0,25 % en poids.

**15.** Pièce en résine de polyoléfine expansée en moule, conforme à l'une des revendications 10 à 14, dans laquelle la teneur en noir de carbone vaut d'au moins 0,5 % en poids à au plus 10 % en poids.

**16.** Pièce en résine de polyoléfine expansée en moule, conforme à l'une des revendications 10 à 14, dans laquelle la teneur en noir de carbone vaut d'au moins 0,5 % en poids à au plus 8 % en poids.

**17.** Pièce en résine de polyoléfine expansée en moule, conforme à l'une des revendications 10 à 16, dans laquelle le noir de carbone est un noir de four.

**18.** Pièce en résine de polyoléfine expansée en moule, conforme à l'une des revendications 10 à 17, dont la masse volumique apparente vaut d'au moins 15 g/L à au plus 100 g/L.

FIG. 1

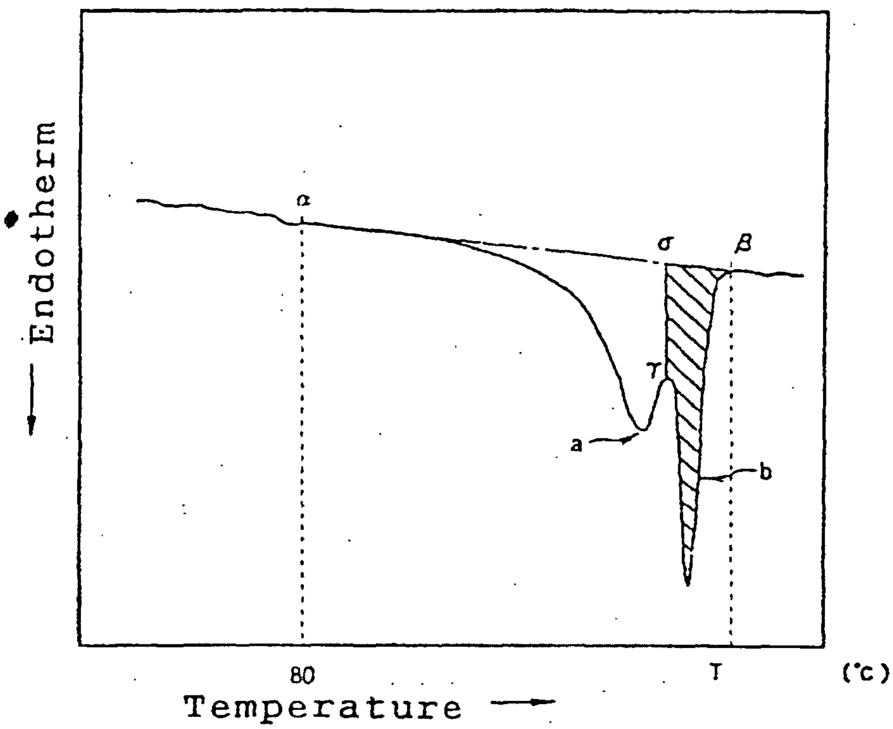

FIG. 2